(19) Europäisches Patentamt
European Patent Office
Office européen des brevets

(11) EP 0 922 937 A2

(12) **EUROPÄISCHE PATENTANMELDUNG**

(43) Veröffentlichungstag:
**16.06.1999 Patentblatt 1999/24**

(51) Int. Cl.$^6$: **G01F 1/66**

(21) Anmeldenummer: **98122721.8**

(22) Anmeldetag: **30.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.12.1997 DE 19755152**

(71) Anmelder:
**SIEMENS AKTIENGESELLSCHAFT**
**80333 München (DE)**

(72) Erfinder:
- **Magori, Valentin Dr.**
  **81539 München (DE)**
- **Von Garssen, Hans-Georg Dr.**
  **85635 Höhenkirchen (DE)**

(54) **Ultraschall-Durchflussmessrohr**

(57) Die Außenwand (13) eines Meßrohrs zur Ultraschall-Durchflußmessung wird beispielsweise durch Bohrungen (12) strukturiert, wobei die im wesentlichen verbliebene Wandstärke der unstrukturierten Innenwand (11) des Meßrohrs (1) so gering ist, daß eine störende Strahlversetzung (8) eines Ultraschallsignals (6) bei seiner Reflexion an der Innenwand (11) unterdrückt wird.

FIG 3

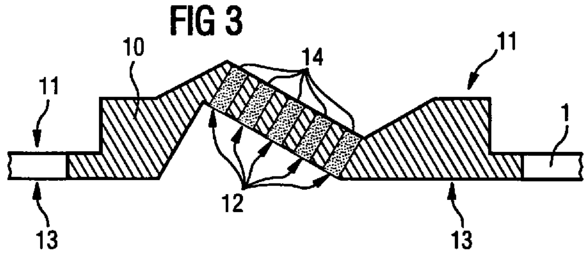


EP 0 922 937 A2

## Beschreibung

Die Erfindung betrifft einen Durchflußmesser in Form eines von einem zu messenden Medium durchflossenen Meßrohres, wobei das Durchflußmedium mit Ultraschall beschallt wird und das ausgesandte Ultraschallsignal auf verschiedenen Wegen detektiert wird.

Das Prinzip der Wellenausbreitung von Ultraschall im bewegten Medium wird dazu benutzt, die Strömungsgeschwindigkeit v eines Mediums und damit das durch ein Rohr geflossene Volumen V zu messen. Es werden insbesondere Wellenpakete stromaufwärts und stromabwärts gesendet und empfangen und die jeweiligen Laufzeiten $t\uparrow$ und $t\downarrow$ bestimmt. Die Geschwindigkeit v ist zur Differenz der reziproken Laufzeiten ($1/t\uparrow - 1/t\downarrow$) proportional.

Bei der Durchflußmessung von Flüssigkeiten mittels Ultraschall sind im allgemeinen zwei Verfahrensweisen möglich, um vom Ultraschallsender zum Empfänger ausgesandte Wellenpakete zu senden.
Die meisten auf dem Markt befindlichen Geräte benutzen das Zwei- oder Mehrstrahlprinzip, bei dem sich die Wandler direkt gegenüberstehen und die Wellenpakete direkt, d.h. ohne Reflexion an den Innenwänden des Meßrohrs, durch das Medium gesendet werden.
Gewisse Nachteile dieser Systeme können durch die Benutzung von Reflexionen an den Innenwänden des Meßrohrs überwunden werden. Die reflektierenden Bereiche des Meßrohrs können durch spezielle Leitreflektoren realisiert sein.
Bei der Verwendung von Reflexionen zur Signalführung kann es allerdings zu störenden Strahlversetzungen des Ultraschallsignals kommen.

Bei der Benutzung von Reflexionen zur Signalführung innerhalb des Meßrohrs hängen die Phase und die Amplitude einer reflektierten Welle von den Materialeigenschaften des schallführenden Mediums, des als Reflektor benutzten Materials und von dem Winkel $\alpha$ zwischen der senkrechten auf den Reflektor und dem einfallenden Schallsignal ab. Hierbei existieren verschiedene Grenzwinkel, bei denen Wellenmoden-Umwandlungen stattfinden. Man unterscheidet zwischen dem Grenzwinkel für die Longitudinalwelle:

$$\alpha_{L,G} = ArcSin\left[\frac{v_{L,I}}{v_{L,II}}\right] \qquad (1)$$

und dem für die Transversalwelle:

$$\alpha_{T,G} = ArcSin\left[\frac{v_{L,I}}{v_{T,II}}\right] \qquad (2)$$

Hierbei steht I für die Flüssigkeit, II für den reflektierenden Festkörper, $v_L$ bzw. $v_T$ ist die Geschwindigkeit der Longitudinal- bzw. Transversalwelle im jeweiligen Material. Der Grenzwinkel für die Longitudinalwelle liegt im allgemeinen bei kleineren Winkeln, als der Grenzwinkel für die Transversalwelle. Ist der Einschallwinkel größer als $\alpha_{T,G'}$ so herrscht totale Reflexion. $\alpha_{T,G'}$ ist dann der sog. Grenzwinkel für Totalreflexion und der Reflexionskoeffizient wird zu 1.

Bei Einfallswinkeln im Bereich des Grenzwinkels der Totalreflexion für die Transversalwelle spaltet die eingestrahlte Longitudinalwelle im Festkörper derart in eine Longitudinalwelle und eine Transversalwelle auf, daß diese zusammen mit der einfallenden Welle eine Oberflächenwelle, eine Rayleighwelle, bilden können. Die stärkste Oberflächenwelle entsteht bei einem Einfallswinkel etwas über dem Grenzwinkel. Bedingung für die Anregung ist, daß die sog. Spurwellenlänge der einfallenden Welle gleich der Wellenlänge der rayleighschen Oberflächenwelle ist. Die Geschwindigkeit der Oberflächenwelle hängt von den Longitudinal-und den Transversalwellen-Geschwindigkeiten im Reflektormaterial ab. Wegen der Reziprozität strahlt auch die entstehende Oberflächenwelle wieder eine Transversalwelle und eine Longitudinalwelle ab, die aber durch die Propagation der Rayleighwelle und der endlichen Breite der einfallenden Welle an einer anderen Stelle des Reflektors um einige Wellenlängen versetzt, wieder abgestrahlt wird.

Ganz allgemein kann gesagt werden, daß bei der Reflexion von Schallwellen ein Teil der reflektierten Schallwelle in den reflektierenden Bereich des Meßrohrs eindringt, sich dort ausbreitet und ortsversetzt teilweise als Störsignal wieder in das Fluid abgestrahlt wird.
Dieses Eindringen wird erheblich verstärkt, wenn die oben erwähnte Bedingung für das Auftreten starker Oberflächenwellen im Material gleichzeitig für einen großen Flächenanteil des reflektierenden Bereiches erfüllt ist.

Die Strahlversetzung nimmt der an der vorgesehenen Stelle reflektierten Longitudinalwelle Energie weg und führt dort zu einem Pegelverlust. Dieser Pegelverlust und die gleichzeitige Erzeugung der ortsversetzten Welle führen zu zu einem Phasenverlauf, der einen starken ungünstigen Einfluß auf die Meßgenauigkeit hat, da er die Laufzeitdifferenzen, aus denen das durchflossenene Volumen errechnet wird, verfälscht.

Das Auftreten der Strahlversetzung schränkt den Betriebsbereich für Ultraschalldurchflußmessungen bezüglich verschiedener Schallgeschwindigkeiten stark ein.

Bisher sind Meßrohre für Ultraschalldurchflußmessungen bekannt, die einen relativ kleinen Betriebsbereich bezüglich verschiedener Schallgeschwindigkeiten in Medien aufweisen.

Aufgabe der Erfindung ist es, einen Durchflußmesser mit minimierter Baulänge bzw. erhöhtem Meßbereich bezüglich der Schallgeschwindigkeit in den Meßmedien oder mit erhöhter Meßgenauigkeit bereitzustellen.

Die Lösung dieser Aufgabe geschieht durch die Merkmale des Anspruches 1.

Der Erfindung liegt die Erkenntnis zugrunde, daß sich die störende Strahlversetzung des Ultraschallsignals durch eine Strukurierung des Außenwand, d.h. der nicht mit dem Medium in Kontakt tretenden Wand, des Meßrohrs unterdrücken läßt.
Die Strukturierung reicht dazu so weit an die Innenwand des Meßrohrs heran, daß sie die zur Ausbildung der Strahlversetzung benötigten Raumbereiche erfaßte Die Innenwand des Meßrohrs wird durch die Strukturierung nicht erfaßt, sie bleibt also innerhalb einer bestimmten Wandstärke unstrukturiert. Weil die Form der mit dem Medium in Kontakt tretenden Innenwand des Meßrohrs durch die Strukturierung nicht verändert wird, ergibt sich der Vorteil, daß das Meßrohr auch nicht in seiner Funktion gestört wird.

Für Rayleighwellen liegt beispielsweise die Eindringtiefe, bei der die Amplitude des Signals auf einen Wert 1/e abgefallen ist, bei einer Ultraschallfrequenz f = 2 MHZ in Edelstahl bei ca. 1,25 mm.
Die Wandstärke kann beispielsweise in einem Bereich 0,25...2 Wellenlängen liegen, sie kann dabei an das Anforderungsprofil des Meßrohres angepaßt sein. Beispielsweise kann bei einem starken Effekt der Strahlversetzung die Strukturierung näher an die Innenwand herangeführt werden als bei nur geringer Abspaltung des Ultraschallsignals. Auch die Beschaffenheit des Mediums kann die Dimensionierung der Wandstärke beeinflussen, beispielsweise sollte bei abrasiver Wirkung des Mediums auf das Meßrohr die Wandstärke hoch genug sein, damit keine Lecks im Meßrohr auftreten.

Die Strukturierung kann beispielsweise dadurch erfolgen, daß Bohrungen, beispielsweise Sacklochbohrungen, oder Schnitte, beispielsweise Sägeschnitte oder Fräsungen, in die Außenwand des Meßrohrs eingebracht werden. Bohrungen und Schnitte besitzen gegenüber einer großflächigen Materialabtragung den Vorteil, daß die Stabilität des Meßrohrs weitgehend erhalten bleibt.

Prinzipiell können die Bohrloch- bzw. Schnittmuster in beliebiger Weise auf die Form des jeweiligen Meßrohrs abgestimmt sein, beispielsweise in bezug auf Muster, Durchmesser, Tiefe und Richtung der Bohrungen oder Richtung, Breite und Tiefe der Schnitte.

Zur Verhinderung der Ausbreitung störender Ultraschallwellen im Meßrohr erfolgt die Strukturierung vorteilhafterweise dadurch, daß die einzelnen Bestandteile der Strukturierung, beispielsweise einzelne Bohrungen oder Schnitte, im Abstand einiger Wellenlängenbruchteile der störenden Schallwelle im Meßrohr voneinander eingebracht sind. Dadurch wird schon am Ort des Auftreffens einer Ultraschallwelle auf das Meßrohr deren Ausbreitung im Meßrohr unterdrückt.
Dabei ist es vorteilhaft, wenn das Strukturierungsmuster regelmäßig ist, beispielsweise durch regelmäßige Anordnung von Bohrungen oder Schnitten.

Andererseits kann die Strahlversetzung auch dadurch unterdrückt werden, daß zwar die Ausbreitung der Ultraschallwellen im Meßrohr erlaubt wird, aber deren Ausbreitungsgeschwindigkeit über den gesamten reflektierenden Bereich hinweg durch eine Strukturierung moduliert wird. Diese Modulation bewirkt, daß die störende Strahlversetzung über die Fläche des reflektierenden Bereichs hinweg weitgehend ausgelöscht wird. Bei dieser Art der Unterdrückung der störenden Strahlversetzung besitzen die einzelnen Bestandteile der Strukturierung vorteilhafterweise einen variierenden Abstand mit zueinander. Die Abstände können dabei auch irregulär sein.

Bei der Strukturierung ist es vorteilhaft, wenn die einzelnen Bestandteile der Strukturierung die gleichen Maße besitzen, beispielsweise wenn die einzelnen Bohrungen eines Bohrlochmusters die gleiche Tiefe und/oder den gleichen Durchmesser aufweisen, bzw. die einzelnen Schnitte eines Schnittmusters die gleiche Tiefe und/oder die gleiche Breite aufweisen.

Auch geeignet, insbesondere bei Meßrohren mit geringer Wandstärke, ist die Strukturierung durch Walzen, Rändeln, Prägen oder vergleichbare Bearbeitungsschritte.

Eine beliebige Kombination dieser Strukturierungsmaßnahmen ist im Sinne der Erfindung ebenfalls denkbar.

Weiterhin ist es vorteilhaft, wenn die Strukturierung so angeordnet ist, daß das auf die Innenwand des Meßrohrs projizierte Muster der Strukturierung mit der Form der auf das Meßrohr auftreffenden Wellenfronten des Ultraschallsignals möglichst übereinstimmt. Gegebenenfalls kann auch ein zusätzlicher Winkelversatz zwischen dem projizierten Muster und der Wellenfront auftreten.

Durch die Strukturierung entstandene Hohlräume des Meßrohrs können mit vom Wandmaterial verschiedem Material ausgefüllt sein. Dabei ist es vorteilhaft, wenn das Füllmaterial eine hohe Dämpfungskonstante für akustische Wellen besitzt.

Weiterhin kann durch die Aufbringung einer Abdeckung auf die Strukturierung die Strukturierung geschützt werden. Beispielsweise kann eine Deckplatte auf die Strukturierung gelegt werden, beispielsweise durch Aufschweißen einer Metallplatte, die mit der Außenwand des Meßrohrs beispielsweise bündig abschließt. Dadurch kann die Strukturierung vor mechanischen oder chemischen Einflüssen der Umgebung des Meßrohrs geschützt werden.

Zur Wegoptimierung des Ultraschallsignals in dem zu messenden Fluid ist es vorteilhaft, wenn die reflektierenden Bereiche des Meßrohrs durch spezielle Leitreflektoren realisiert sind.

In den folgenden Figuren wird die Erfindung anhand von Ausführungsbeispielen dargestellt.

Figur 1 zeigt einen konventionellen Ultraschall-Durchflußmesser mit seitenwand-paralleler Durchschallung des Strömungskanales,

Figur 2 zeigt die Strahlversetzung durch Oberflächenwelleneffekte anhand einer Schlierenaufnahme eines Ultraschallstrahles der an einer Flüssig/Fest-Grenzfläche reflektiert wird,

Figur 3, 4a und 4b zeigen eine Ausführung eines Reflektors mit strukturierter Außenwand,

Figur 5 zeigt die Auswirkung einer Strukturierung auf ein Meßsignal,

Figur 6 zeigt eine weitere Ausführung eines Reflektors mit strukturierter Außenwand.

In Figur 1 wird eine Variante eines Meßrohres 1 schematisch dargestellt, die Sende-/Empfangseinheiten 2, 3 aufweist, wobei entweder in einer Richtung geschallt wird oder durch den Einsatz von kombinierten Sende-/Empfangseinheiten 2, 3 abwechselnd in Gegenrichtung von links nach rechts bzw. rechts nach links durch das hindurchfließende Medium geschallt wird. Der Verlauf des Ultraschallsignales 6 ist durch eine Linienschar angedeutet. Die speziellen Leitreflektoren 4, 5 dienen dazu, die von den Sende-/Empfangseinheiten 2, 3 ausgesandten bzw. empfangenen Ultraschallsignale in eine grobe Richtung zu führen. Dazwischen, etwa in der Mitte der dargestellten Figur wird das Ultraschallsignal 6 an einem Teil der Innenwand des Meßrohrs 1, in diesem Fall an der oberen Wand, reflektiert.

Figur 2 zeigt eine Schlierenaufnahme eines Ultraschallstrahles, der an einer Grenzfläche fest/flüssig reflektiert wird. Die Strahlversetzung 8 ergibt sich durch die Abspaltung einer Oberflächenwelle. In Figur 2 ist dabei der Festkörper unterhalb einer eingezeichneten Grenzlinie und das Fluid oberhalb dieser Linie angesiedelt. Ein einfallender Strahl bildet mit einer Flächennormalen 9 einen Einfallswinkel 7, wobei der reflektierte Strahl mit der Flächennormalen 9 einen Reflexionswinkel 71 bildet.

Figur 3 zeigt schematisch als Schnittbild in Seitenansicht einen erfindungsgemäßen speziellen Leitreflektor 10 als Teil eines Meßrohrs 1 mit durch Einbringung von Bohrlöchern 12 an der Außenwand 13 des Reflektors 10 realisierter Strukturierung. Die Bohrlöcher 12 sind senkrecht zu der von ihnen hinterbohrten Meßrohraußenwand 13 eingebracht. Die Form der Innenwand 11 des Reflektors 1 bleibt dadurch unverändert. Die durch die Bohrungen 12 entstandenen Hohlräume sind mit Füllmaterial 14 gefüllt.

Figur 4a zeigt einen Reflektor 10 in Aufsicht auf dessen Außenwand 13. Der Reflektor 10 ist durch Bohrlöcher 12, die hier durch einen gemeinsamen Pfeil gekennzeichnet sind, von der Außenwand 13 her strukturiert. Der Durchmesser der Bohrlöcher 12 beträgt 1 mm.

Figur 4b zeigt in Betrachtung der Außenwand 13 einen Reflektor 10 wie in Figur 4a in Aufsicht parallel zum Verlauf der Bohrlöcher 12, die durch einen gemeinsamen Pfeil gekennzeichnet sind. Man erkennt die durch regelmäßige Anordnung der Bohrlöcher 12 entstandene Strukturierung.

Figur 5 zeigt durch eine Auftragung der Abweichung des gemessenen Durchflusses von einem Referenzwert in % gegen die Laufzeit des Ultraschallsignals in µs die wesentliche Auswirkung der Erfindung. Die beiden Graphen zeigen, daß für einen erfindungsgemäß hinterbohrten Reflektor die Durchflußmeßzahlen über einen breiten Bereich von Schallgeschwindigkeiten, die hier in Laufzeiten des Ultraschallsignals umgerechnet wurden, weitgehend gleichbleibend sind, während die Abweichung der Durchflußmeßzahlen eines Reflektors eine beträchtliche Abhängigkeit von der Schallgeschwindigkeit zeigt.

Die Wirksamkeit des Vorgehens im erfinderischen Sinne kann somit dokumentiert werden. Für das Experiment wurde eine konstante Strömungsgeschwindigkeit eingestellt. Die Variation der Schallgeschwindigkeit c erfolgte durch Erwärmen des Mediums.

Figur 6 zeigt schematisch als Schnittbild in Seitenansicht eine Strukturierung der Außenwand 13 des Meßrohrs 1 mit einer Anordnung von Sägeschnitten 15, die senkrecht zur Innenwand 11 des Meßrohrs 1 eingebracht sind und die zueinander einen variablen Abstand besitzen.

## Patentansprüche

1. Durchflußmesser in Form eines von einem zu messenden Medium durchflossenen Meßrohres (1), mit

   mindestens einer Ultraschall-Sendeeinheit (2,3), mit der das Medium beschallt wird, und mindestens einer Ultraschall-Empfangseinheit (2,3), die ein Ultraschall-Signal, (6) detektiert, wobei ein das Ultraschallsignal (6) reflektierender Bereich des Meßrohrs (1) von seiner Außenwand (13) her so strukturiert ist, daß

   die im wesentlichen verbliebene Wandstärke der unstrukturierten Innenwand (11) des Meßrohrs (1) so gering ist, daß eine Strahlversetzung (8) bei einer Reflexion des Ultraschallsignals (6) unterdrückt wird.

2. Durchflußmesser nach Anspruch 1, bei dem

   die Strukturierung der Außenwand (13) des Meßrohrs (1) in Form eines regelmäßigen Musters realisiert ist.

3. Durchflußmesser nach einem der vorhergehenden Ansprüche, bei dem

   die Strukturierung der Außenwand (13) des Meßrohrs (1) durch Bohrungen (12), Schnitte oder andere materialabtragende Methoden oder durch eine Kombination von Strukturierungsmaßnahmen erfolgt.

**4.** Durchflußmesser nach einem der vorhergehenden Ansprüche, bei dem

die zur Strukturierung der Außenwand (13) des Meßrohrs (1) verwendeten Bohrungen (12), Schnitte oder anderen materialabtragenden Methoden jeweils gleiche Abmessungen besitzen.

**5.** Durchflußmesser nach einem der vorhergehenden Ansprüche, bei dem

durch die Strukturierung der Außenwand (13) des Meßrohrs (1) erzeugte Hohlräume mit einem vom Material der Außenwand (13) des Meßrohrs (1) verschiedenen Füllmaterial (14) ausgefüllt sind.

**6.** Durchflußmesser nach Anspruch 5, bei dem

das Füllmaterial (14) eine hohe Dämpfungskonstante für akustische Wellen besitzt

**7.** Durchflußmesser nach einem der vorhergehenden Ansprüche, bei dem

beim Einsatz von mindestens zwei reflektierenden Bereichen des Meßrohrs (1) die Außenwand (13) an den jeweiligen reflektierenden Bereichen unterschiedlich strukturiert ist.

**8.** Durchflußmesser nach einem der vorhergehenden Ansprüche, bei dem

die reflektierenden Bereiche der Innenwand (11) des Meßrohrs (1) durch spezielle Leitreflektoren (4,5) realisiert sind.

**9.** Durchflußmesser nach einem der vorhergehenden Ansprüche, bei dem

eine oder mehrere Abdeckungen auf der Strukturierung angebracht sind.

FIG 1

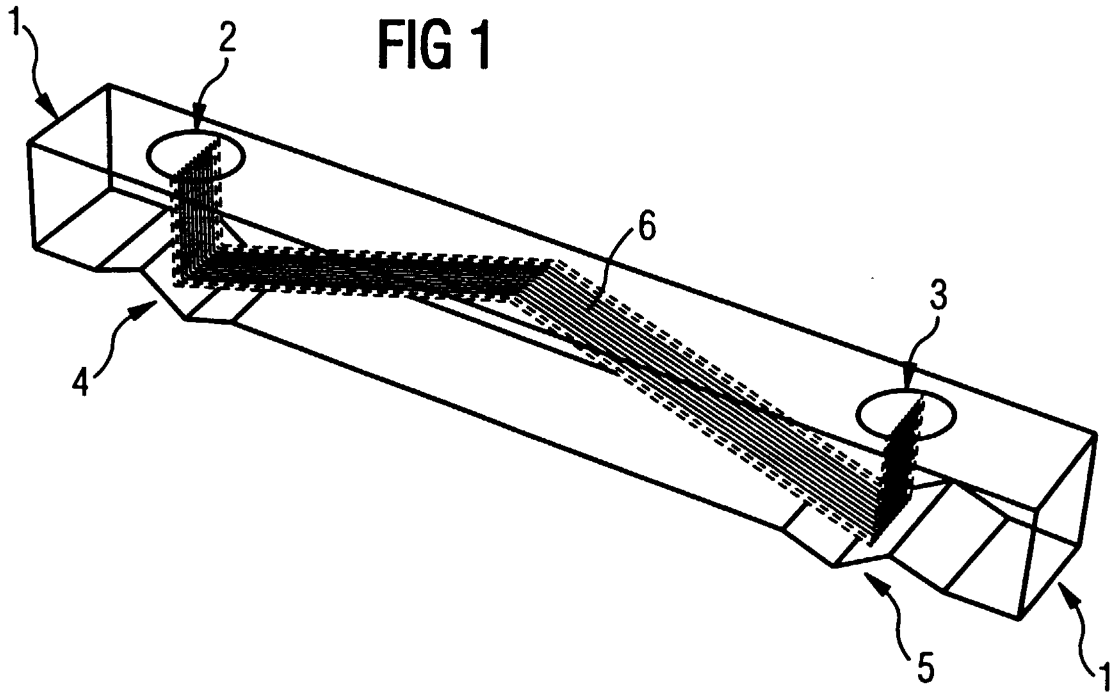


FIG 2

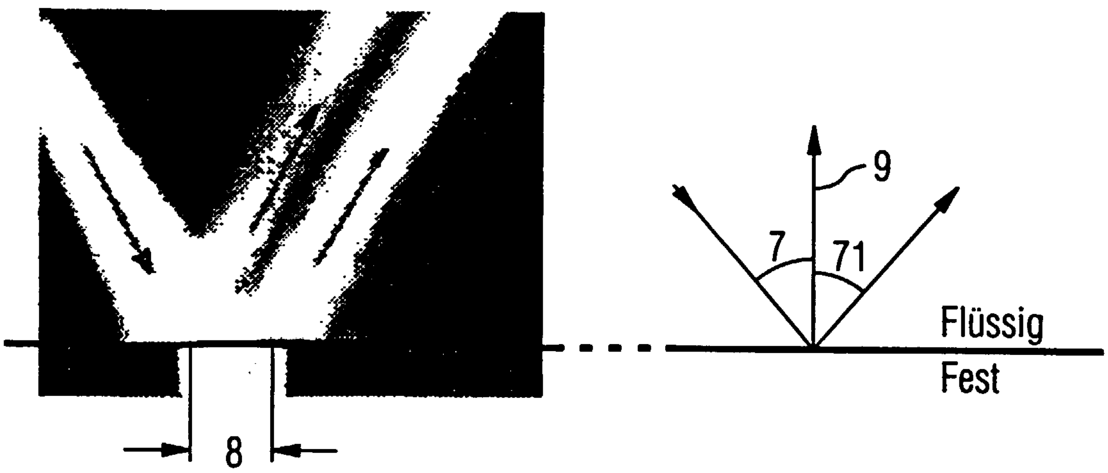

FIG 3

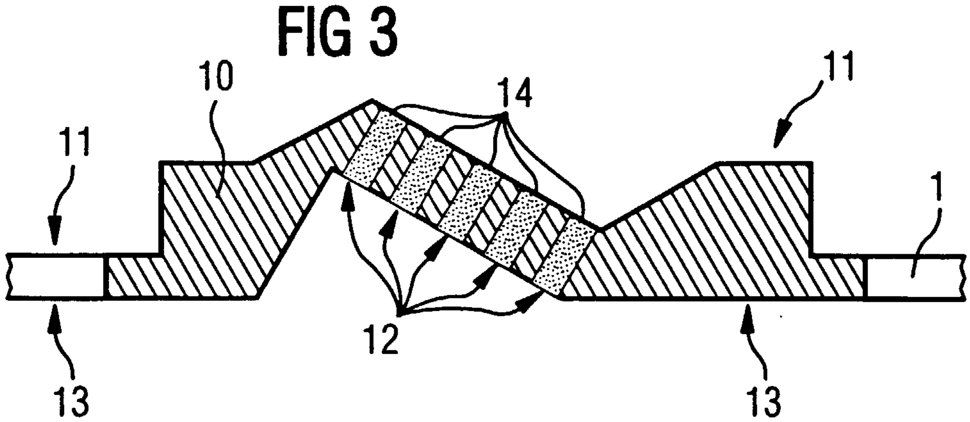


FIG 4A

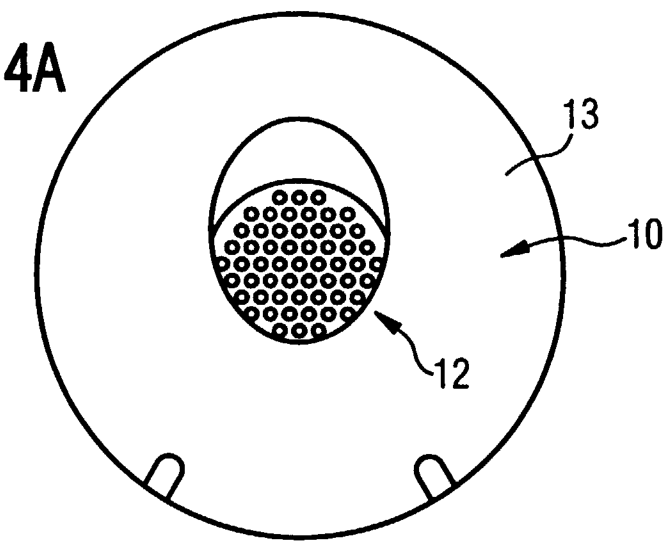


FIG 4B

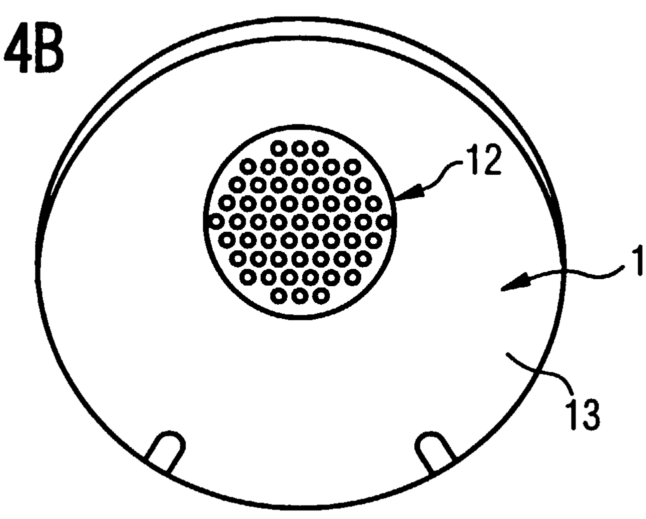

FIG 5

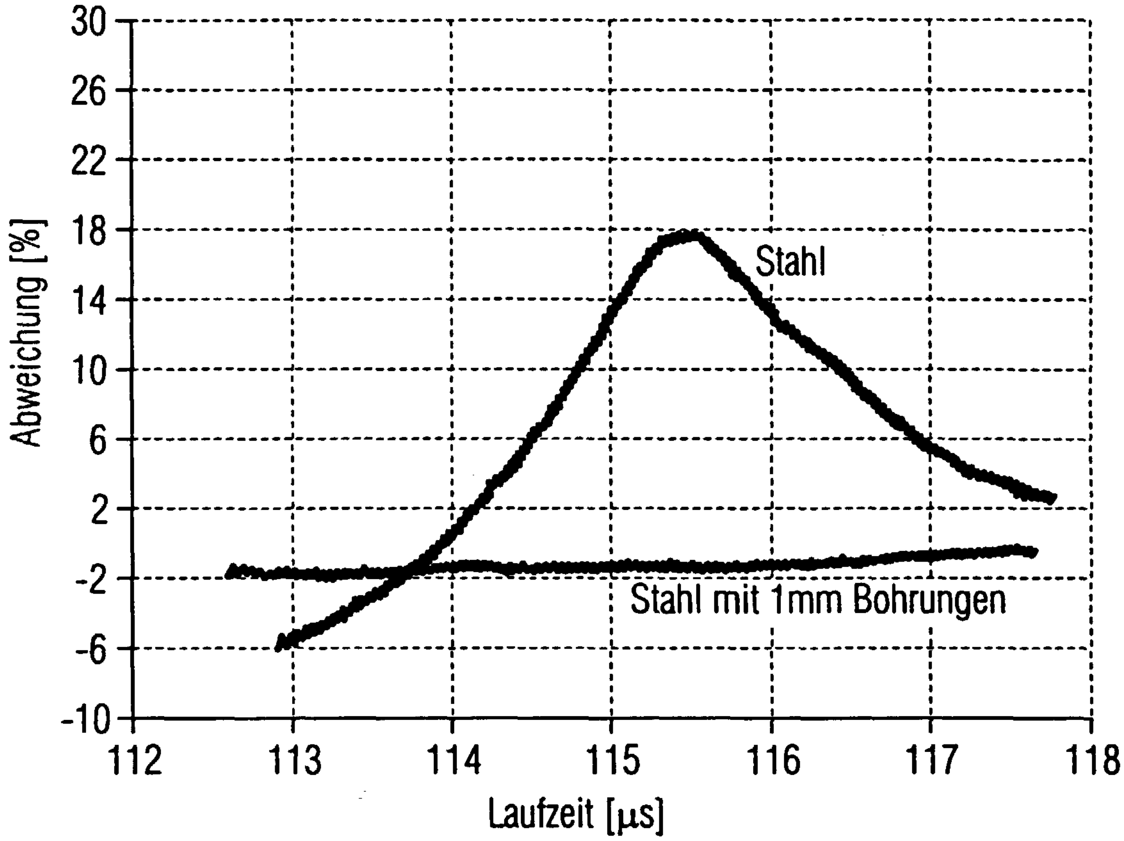
30
26
22
18
14
10
6
2
-2
-6
-10
Abweichung [%]
112
113
114
115
116
117
118
Laufzeit [µs]
Stahl
Stahl mit 1mm Bohrungen

FIG 6

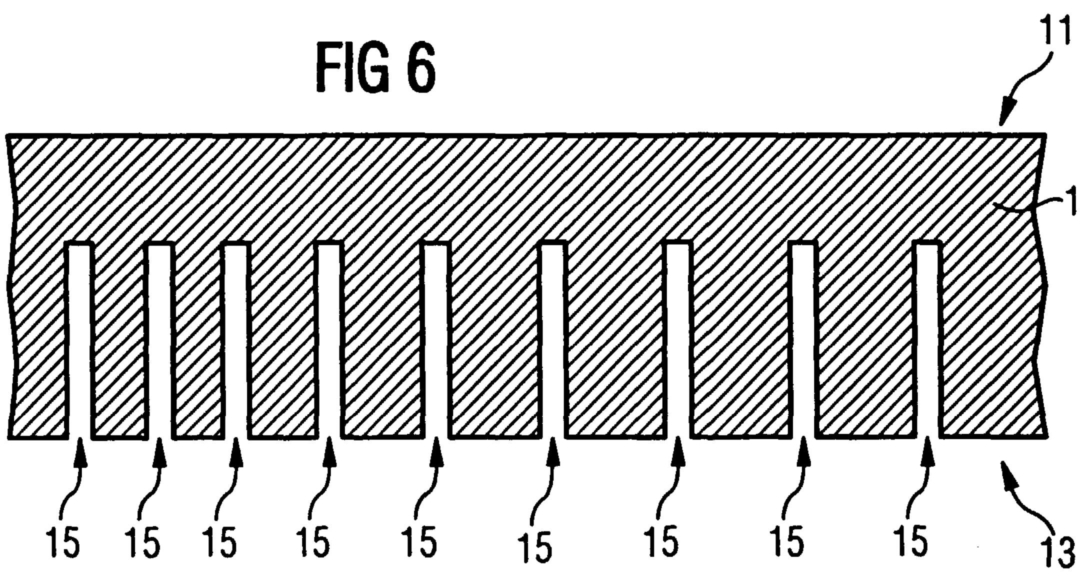
11
1
15
15
15
15
15
15
15
15
15
13